# EUROPEAN PATENT APPLICATION

(11) **EP 4 194 124 A1**
(43) Date of publication of application: **14.06.2023**
(21) Application number: 22208366.9
(22) Date of filing: 18.11.2022
(51) Int. Cl.: B22F 10/22, B22F 12/53, B33Y 10/00, B33Y 30/00, B22F 10/47, B22F 10/40, B22F 10/43, B33Y 40/00, B33Y 50/02, B22F 9/08

(54) **A METAL DROP EJECTING THREE-DIMENSIONAL (3D) OBJECT PRINTER AND METHOD OF OPERATION FOR FORMING METAL SUPPORT STRUCTURES**

(30) Priority: 07.12.2021 US 202117457966
(71) Applicant: Xerox Corporation, Webster, NY 14580 (US)
(72) Inventor: HERRMANN, Douglas K., Webster, 14580 (US); LIU, Chu-heng, Penfield, 14526 (US); PRAHARAJ, Seemit, Webster, 14580 (US); LEFEVRE, Jason M., Penfield, 14526 (US); MCCONVILLE, Paul J., Webster, 14580 (US); RAMESH, PALGHAT S., Pittsford, 14534 (US)
(74) Representative: Gill Jennings & Every LLP

(57) **Abstract**

A three-dimensional (3D) metal object manufacturing apparatus is equipped with a magnetic field generator to form a magnetic field selectively about a nozzle from which melted metal drops are ejected. The drops ejected in the presence of the magnetic field have their velocities reduced from the initial velocity at which they are ejected. The reduced velocity increases the time in flight of the drops before they impact their landing areas. The increased travel time enables the melted metal drops to oxidize sufficiently that they bond less tightly than the drops ejected without passing through the magnetic field. Thus, the apparatus can form metal support structures that adhere less tightly to the part portions of the object so they can be more easily removed after printing of the object.

## Description

### TECHNICAL FIELD

This disclosure is directed to three-dimensional (3D) object printers that eject melted metal drops to form objects and, more particularly, to the formation of metal support structures with the ejected metal used to form objects in such printers.

### BACKGROUND

Three-dimensional printing, also known as additive manufacturing, is a process of making a three-dimensional solid object from a digital model of virtually any shape. Many three-dimensional printing technologies use an additive process in which an additive manufacturing device ejects drops or extrudes ribbons of a build material to form successive layers of the part on top of previously deposited layers. Some of these technologies use ejectors that eject UV-curable materials, such as photopolymers or elastomers, while others melt plastic materials to produce thermoplastic material that is extruded to form successive layers of thermoplastic material. These technologies are used to construct three-dimensional objects with a variety of shapes and features. This additive manufacturing method is distinguishable from traditional object-forming techniques, which mostly rely on the removal of material from a work piece by a subtractive process, such as cutting or drilling.

Recently, some 3D object printers have been developed that eject drops of melted metal from one or more ejectors to form 3D metal objects. These printers have a source of solid metal, such as a roll of wire, macro-sized pellets, or metal powder, and the solid metal is fed into a heated receptacle of a vessel in the printer where the solid metal is melted and the melted metal fills the receptacle. The receptacle is made of nonconductive material around which an electrical wire is wrapped to form a coil. An electrical current is passed through the coil to produce an electromagnetic field that causes a drop of melted metal at the nozzle of the receptacle to separate from the melted metal within the receptacle and be propelled from the nozzle. A platform is configured to move in a X-Y plane parallel to the plane of the platform by a controller operating actuators so melted metal drops ejected from the nozzle form metal layers of an object on the platform. The controller operates another actuator to alter the position of the ejector or platform to maintain a constant distance between the ejector and an existing layer of the metal object being formed. This type of metal drop ejecting printer is called a magnetohydrodynamic (MHD) printer.

In the 3D object printing systems that use elastomer materials, temporary support structures are formed by using an additional ejector to eject drops of a different material to form supports for overhang and other object features that extend away from the object during formation of the object. Because these support structures are made from materials that are different than the materials that form the object they can be designed not to adhere or bond well with the object. Consequently, they can be easily separated from the object feature that they supported during object manufacture and removed from the object after object formation is finished. Such is not the case with metal drop ejecting systems. If the melted metal used to form objects with the printer is also used to form support structures, then the support structure bonds strongly with the features of the object that need support while they solidify. Consequently, a significant amount of cutting, machining, and polishing is needed to remove the supports from the object. Coordinating another metal drop ejecting printer using a different metal is difficult because the thermal conditions for the different metals can affect the build environments of the two printers. For example, a support structure metal having a higher melting temperature can weaken or soften the metal forming the object or a support metal structure having a lower melting temperature than the object can weaken when the object feature made with the higher temperature melted metal contacts the support structure. Being able to form support structures that enable metal drop ejecting printers to form metal object overhangs and other extending features would be beneficial.

### SUMMARY

A new method of operating a 3D metal object printer forms support structures that do not adhere tightly to object features supported by the structures. The method includes detecting a portion of a support structure layer to be formed with an ejector head configured to eject melted metal drops through a nozzle toward a planar member, and operating a magnetic field generator to generate a magnetic field through which the ejected melted metal drops pass before being received at the planar member.

A new 3D metal object printer forms support structures that do not adhere tightly to object features supported by the structures. The new 3D metal object printer includes an ejector head configured to eject melted metal drops through a nozzle, an magnetic field generator configured to generate a magnetic field at the nozzle, planar member positioned to receive melted metal drops ejected from the ejector head, and a controller operatively connected to the magnetic field generator, the controller being configured to operate the magnetic field generator to generate a magnetic field through which the ejected melted metal drops pass before being received at the planar member.

### BRIEF DESCRIPTION OF THE DRAWINGS

The foregoing aspects and other features of a method that forms support structures that do not adhere tightly to object features supported by the structures and a 3D metal object printer that implements the method are explained in the following description, taken in connection with the accompanying drawings.
FIG. 1 depicts a new 3D metal object printer that forms support structures that do not adhere tightly to object features supported by the structures.
FIG. 2 depicts the electromagnetic coil around the nozzle of the 3D metal object printer shown in FIG. 1 that is selectively operated to form support structures that do not adhere tightly to object features.
FIG. 3 is a graph of a ratio of a final velocity at which a melted metal drops impacts a surface to the initial velocity of the melted metal drop and the ratio of time in flight to a reference case where the velocity of the ejected melted metal drop does not appreciably change.
FIG. 4A illustrates the formation of support material in a part being manufactured by the 3D metal object printer of FIG. 1.
FIG. 4B illustrates the completed part of FIG. 4A after the support structures have been removed.
FIG. 5 is a flow diagram for a process that operates the 3D metal object printer of FIG. 1 that forms support structures that do not adhere tightly to object features supported by the structures.
FIG. 6 is a block diagram of a prior art 3D metal printer that does not include components for forming support structures made with the same metal being used to form the object.

### DETAILED DESCRIPTION

For a general understanding of the 3D metal object printer and its operation as disclosed herein as well as the details for the printer and its operation, reference is made to the drawings. In the drawings, like reference numerals designate like elements.

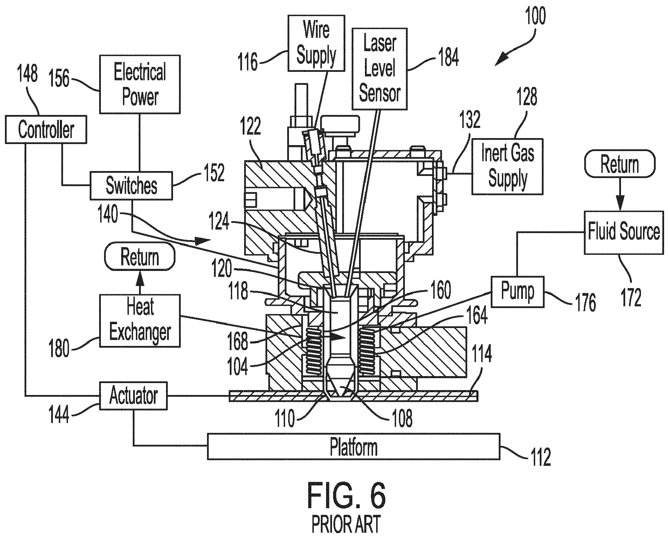

FIG. 6 illustrates an embodiment of a previously known 3D metal object printer 100 that cannot form support structures with the same melted metal being used to form a metal object without the support structures adhering too tightly to the object features. As used in this document, the term "support structures" means formations of metal made with melted metal drops ejected from an ejector head that are later removed from a part formed with other melted metal drops ejected from the ejector head. As used in this document, the term "part" means an object of manufacture made with a 3D metal drop ejecting apparatus. In the printer of FIG. 6, drops of melted bulk metal are ejected from a receptacle of a removable vessel 104 having a single nozzle 108 to form layers of the manufactured object on a build platform 112. As used in this document, the term "removable vessel" means a hollow container having a receptacle configured to hold a liquid or solid substance and the container as a whole is configured for installation and removal in a 3D metal object printer. As used in this document, the term "vessel" means a hollow container having a receptacle configured to hold a liquid or solid substance that may be configured for installation and removal from a 3D object metal printer. As used in this document, the term "bulk metal" means conductive metal available in aggregate form, such as wire of a commonly available gauge, macro-sized metal pellets, and metal powder.

With further reference to FIG. 6, a source of bulk metal 116, such as metal wire 120, is fed into a wire guide 124 that extends through the upper housing 122 in the ejector head 140 and melted in the receptacle of the removable vessel 104 to provide melted metal for ejection from the nozzle 108 through an orifice 110 in a baseplate 114 of the ejector head 140. As used in this document, the term "nozzle" means an orifice fluidically connected to a volume within a receptacle of a vessel containing melted metal that is configured for the expulsion of melted metal drops from the receptacle within the vessel. As used in this document, the term "ejector head" means the housing and components of a 3D metal object printer that melt, eject, and regulate the ejection of melted metal drops for the production of metal objects. A melted metal level sensor 184 includes a laser and a reflective sensor. The reflection of the laser off the melted metal level is detected by the reflective sensor, which generates a signal indicative of the distance to the melted metal level. The controller receives this signal and determines the level of the volume of melted metal in the removable vessel 104 so it can be maintained at an appropriate level 118 in the receptacle of the removable vessel. The removable vessel 104 slides into the heater 160 so the inside diameter of the heater contacts the removable vessel and can heat solid metal within the receptacle of the removable vessel to a temperature sufficient to melt the solid metal. As used in this document, the term "solid metal" means a metal as defined by the periodic chart of elements or alloys formed with these metals in solid rather than liquid or gaseous form. The heater is separated from the removable vessel to form a volume between the heater and the removable vessel 104. An inert gas supply 128 provides a pressure regulated source of an inert gas, such as argon, to the ejector head through a gas supply tube 132. The gas flows through the volume between the heater and the removable vessel and exits the ejector head around the nozzle 108 and the orifice 110 in the baseplate 114. This flow of inert gas proximate to the nozzle insulates the ejected drops of melted metal from the ambient air at the baseplate 114 to prevent the formation of metal oxide during the flight of the ejected drops. A gap between the nozzle and the surface on which an ejected metal drop lands is intentionally kept small enough that the inert gas exiting around the nozzle does not dissipate before the drop within this inert gas flow lands.

The ejector head 140 is movably mounted within Z-axis tracks for movement of the ejector head with respect to the platform 112. One or more actuators 144 are operatively connected to the ejector head 140 to move the ejector head along a Z-axis and are operatively connected to the platform 112 to move the platform in an X-Y plane beneath the ejector head 140. The actuators 144 are operated by a controller 148 to maintain an appropriate distance between the orifice 110 in the baseplate 114 of the ejector head 140 and a surface of an object on the platform 112.

Moving the platform 112 in the X-Y plane as drops of molten metal are ejected toward the platform 112 forms a swath of melted metal drops on the object being formed. Controller 148 also operates actuators 144 to adjust the distance between the ejector head 140 and the most recently formed layer on the substrate to facilitate formation of other structures on the object. While the molten metal 3D object printer 100 is depicted in FIG. 6 as being operated in a vertical orientation, other alternative orientations can be employed. Also, while the embodiment shown in FIG. 6 has a platform that moves in an X-Y plane and the ejector head moves along the Z axis, other arrangements are possible. For example, the actuators 144 can be configured to move the ejector head 140 in the X-Y plane and along the Z axis or they can be configured to move the platform 112 in both the X-Y plane and Z-axis.

A controller 148 operates the switches 152. One switch 152 can be selectively operated by the controller to provide electrical power from source 156 to the heater 160, while another switch 152 can be selectively operated by the controller to provide electrical power from another electrical source 156 to the coil 164 for generation of the electrical field that ejects a drop from the nozzle 108. Because the heater 160 generates a great deal of heat at high temperatures, the coil 164 is positioned within a chamber 168 formed by one (circular) or more walls (rectilinear shapes) of the ejector head 140. As used in this document, the term "chamber" means a volume contained within one or more walls within a metal drop ejecting printer in which a heater, a coil, and a removable vessel of a 3D metal object printer are located. The removable vessel 104 and the heater 160 are located within such a chamber. The chamber is fluidically connected to a fluid source 172 through a pump 176 and also fluidically connected to a heat exchanger 180. As used in this document, the term "fluid source" refers to a container of a liquid having properties useful for absorbing heat. The heat exchanger 180 is connected through a return to the fluid source 172. Fluid from the source 172 flows through the chamber to absorb heat from the coil 164 and the fluid carries the absorbed heat through the exchanger 180, where the heat is removed by known methods. The cooled fluid is returned to the fluid source 172 for further use in maintaining the temperature of the coil in an appropriate operational range.

The controller 148 of the 3D metal object printer 100 requires data from external sources to control the printer for metal object manufacture. In general, a three-dimensional model or other digital data model of the object to be formed is stored in a memory operatively connected to the controller 148. The controller can selectively access the digital data model through a server or the like, a remote database in which the digital data model is stored, or a computer-readable medium in which the digital data model is stored. This three-dimensional model or other digital data model is processed by a slicer implemented with a controller to generate machine-ready instructions for execution by the controller 148 in a known manner to operate the components of the printer 100 and form the metal object corresponding to the model. The generation of the machine-ready instructions can include the production of intermediate models, such as when a CAD model of the device is converted into an STL data model, a polygonal mesh, or other intermediate representation, which in turn can be processed to generate machine instructions, such as g-code, for fabrication of the object by the printer. As used in this document, the term "machine-ready instructions" means computer language commands that are executed by a computer, microprocessor, or controller to operate components of a 3D metal object additive manufacturing system to form metal objects on the platform 112. The controller 148 executes the machine-ready instructions to control the ejection of the melted metal drops from the nozzle 108, the positioning of the platform 112, as well as maintaining the distance between the orifice 110 and a surface of the object on the platform 112.

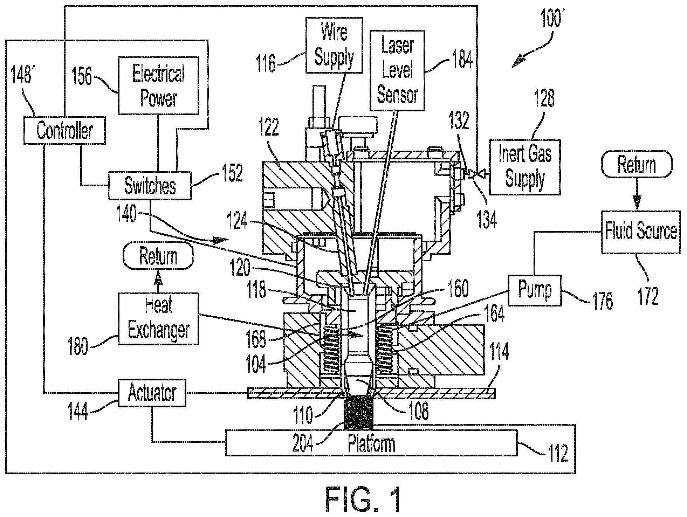

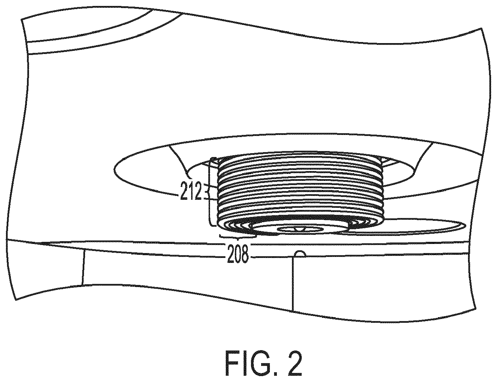

Using like reference numbers for like components and removing some of the components not used to form metal support structures that do not adhere too tightly to the object during formation, a new 3D metal object printer 100' is shown in FIG. 1. The printer 100' includes an electromagnetic coil 204 that is wound about the nozzle 108 of the vessel 104 as shown in FIG. 2. This electromagnetic coil is connected to the electrical power source 156 through one of the switches 152. The controller 148', which is configured with programmed instructions stored in a non-transitory memory connected to the controller, operates one of the switches 152 to connect the electromagnetic coil 204 to electrical power selectively when the controller 148' executes the programmed instructions for formation of metal support structures. When the coil is connected to the electrical power source 156, it produces a magnetic field and the ejected melted metal drops must pass through this field. As explained more fully below, the effect of this field on the melted metal drops reduces the velocity of the ejected melted metal drops so they have time to oxidize before they impact their landing areas. These oxidized metal drops do not bond tightly to the solidified metal of the part nor do they bond tightly to one another. Thus, metal support structure can be formed with the oxidized metal drops and since they do not bond tightly to the part or to one another, the metal support structure can be easily removed after manufacture of the part is completed.

As shown in FIG. 2, the electromagnetic coil 204 is wound about the nozzle 108 that extends through the plate 114. In one embodiment, the total gauge of the coil 204 is American Wire Gauge (AWG) 2/0 for electrical currents up to 220 Amps received from the electrical power source 156. The coil 204 is formed with a plurality of concentric turns 208 wound about the nozzle 108 and this concentric arrangement of electrical wire forms the overall wire gauge of AWG 2/0. In this embodiment, ten concentric arrangements 212 are provided along a 10 mm length of the nozzle 108. As used in this document, the term "arrangement of electrical conducting wire" means a concentric wrapping of an electrical conducting wire about an ejector head nozzle to form a disc of electrical conducting wire that extends perpendicularly from the circumference of the passageway through the nozzle.

Melted metal drops that land on a surface with little or no kinetic energy have reduced bond strength. This reduced bond strength is thought to arise from lower drop velocities reducing the effectiveness of wetting and coalescence between melted metal drops. Operating the electromagnetic coil 204 lowers the velocities of the drops that pass through the magnetic field so it reduces the ability of the drops to bond to one another. A steady magnetic field produced by current passing through the coil is perpendicular to the motion of the ejected drops. This field induces eddy currents in the drops, which in turn induces a Lorentz force in a direction opposite to the motion of the drop. This Lorentz force acts to dampen the motion of the drop and the mechanical energy is dissipated as heat. The dampening force is proportional to the velocity of the drop. Thus, a uniform magnetic field across a gap of about 10mm between the nozzle and the drop landing surface causes a melted metal drop having a 500 micron diameter that was ejected with an initial velocity of 3.5 m/s to have a reduced velocity and time of flight that is a function of the magnetic field strength.

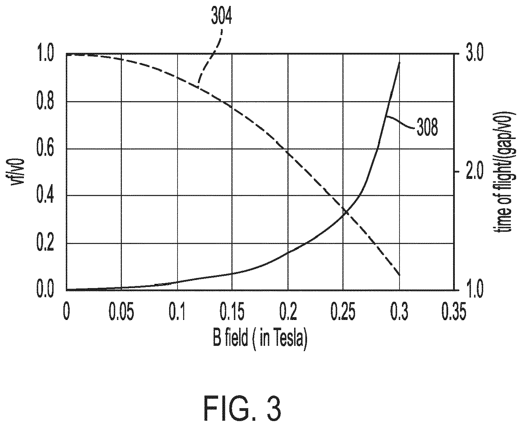

The graph of FIG. 3 shows the ratio of the final velocity at which a melted metal drop impacts a surface to the initial velocity of the ejected drop and the ratio of time in flight for the drop to a reference case with no magnetic dampening. To produce weak bonding drops, an impact velocity ratio of 0.5 or below and a time in flight ratio of 2 or above is targeted. These values are used to identify a magnetic field strength of approximately 0.27 Tesla (or 2700 Gauss) as being adequate for reducing the impact velocity of the melted metal drops that form weakly bonded support structures. The reduced velocity of these drops enables the drops to oxidize more than the unencumbered drops forming part 408 so they do not bond as strongly. To further enhance the oxidation of the ejected metal drops, the controller 148' can operate a valve 134 in the input line 132 to disconnect the inert gas supply 128 from the space about the nozzle 108 selectively so the inert gas does not impede the oxidation of the melted metal drops during their travel to the landing surface.

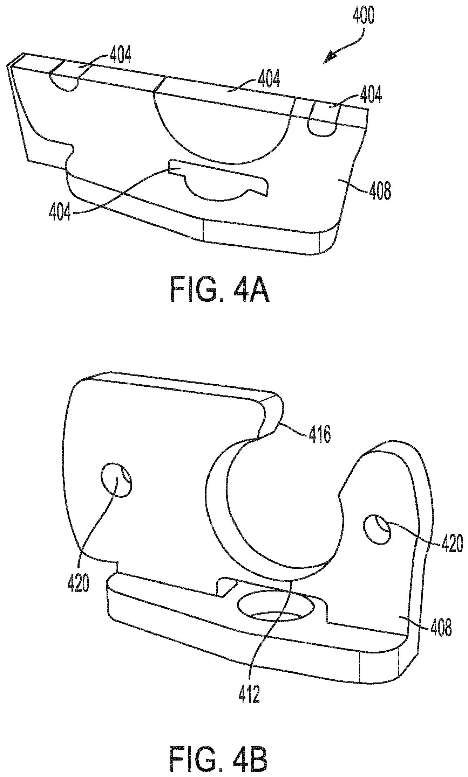

FIG. 4A shows a composite object 400 with weakly bonding sections 404 in part 408. The part 408 is formed with melted metal drops that were ejected and did not pass through a magnetic field before impacting a surface. Sections 404 were formed with melted metal drops that did pass through a magnetic field produced by the electromagnetic coil 204 before impacting a surface. The magnetic field strength previously identified for the noted gap and initial velocity enables the melted metal drops encountering the magnetic field to oxidize over twice as much as the drops that do not pass through the magnetic field. When the sections 404 are removed to leave the part 408 as shown in FIG. 4B, one can see that the lowest section 404 supported the lower bridge 412 of an opening in the part and the section that filled the opening supported overhang 416 during manufacture of the part. Because these sections as well as the sections that filled the holes 420 are weakly bonded together, they can be removed from the part 408 without requiring machining or cutting operations.

The controller 148' can be implemented with one or more general or specialized programmable processors that execute programmed instructions. The instructions and data required to perform the programmed functions can be stored in memory associated with the processors or controllers. The processors, their memories, and interface circuitry configure the controllers to perform the operations previously described as well as those described below. These components can be provided on a printed circuit card or provided as a circuit in an application specific integrated circuit (ASIC). Each of the circuits can be implemented with a separate processor or multiple circuits can be implemented on the same processor. Alternatively, the circuits can be implemented with discrete components or circuits provided in very large scale integrated (VLSI) circuits. Also, the circuits described herein can be implemented with a combination of processors, ASICs, discrete components, or VLSI circuits. During metal object formation, image data for a structure to be produced are sent to the processor or processors for controller 148' from either a scanning system or an online or work station connection for processing and generation of the signals that operate the components of the printer 100' to form an object on the platform 112.

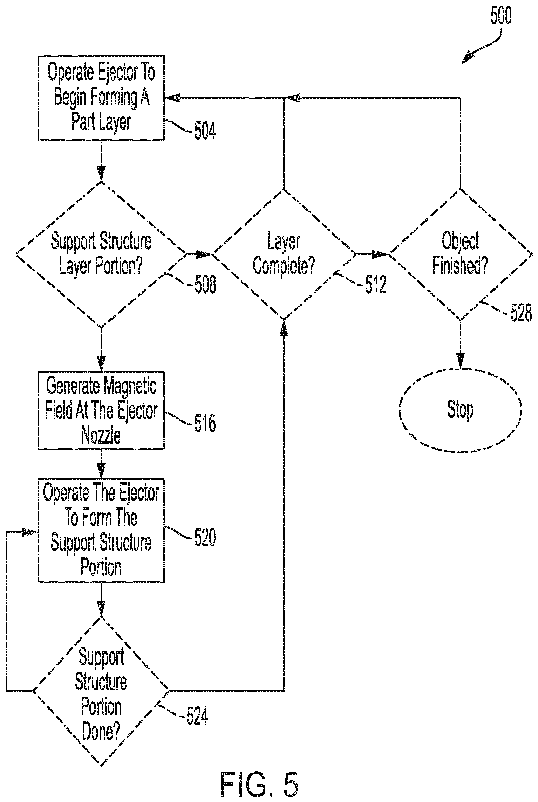

A process for operating the 3D metal object printer 100' to form metal support structures that weakly attach to object features is shown in FIG. 5. In the description of the process, statements that the process is performing some task or function refers to a controller or general purpose processor executing programmed instructions stored in non-transitory computer readable storage media operatively connected to the controller or processor to manipulate data or to operate one or more components in the printer to perform the task or function. The controller 148' noted above can be such a controller or processor. Alternatively, the controller can be implemented with more than one processor and associated circuitry and components, each of which is configured to form one or more tasks or functions described herein. Additionally, the steps of the method may be performed in any feasible chronological order, regardless of the order shown in the figures or the order in which the processing is described.

FIG. 5 is a flow diagram for a process 500 that uses the electromagnetic coil 204 and the controller 148' configured to execute programmed instructions stored in a non-transitory memory operatively connected to the controller to build metal support structures that are weakly attached to the object features that they support or on which they are built. The process begins forming a part portion of a layer of an object (block 504) until a support structure portion of the layer being formed is detected (block 508). The controller operates one of the switches 152 to connect the coil 204 to electrical power source 156 and generate a magnetic field at the ejector nozzle (block 516). The melted metal drops forming the portion of the layer for the support structure are ejected through the magnetic field produced by the coil so the drops oxidize before landing (block 520). Once the support structure portion is finished (block 524), the process determines if the layer is finished (block 512) and, if it is not, it continues forming the part portion (block 504). Once the layer is complete, the process determines if formation of the object is finished (block 528), if it is not, then another layer is formed (blocks 504, 508, 516, 520, and 524). If the object manufacture is complete (block 528), the process stops.

It will be appreciated that variants of the above-disclosed and other features and functions, or alternatives thereof, may be desirably combined into many other different systems, applications or methods. Various presently unforeseen or unanticipated alternatives, modifications, variations or improvements may be subsequently made by those skilled in the art that are also intended to be encompassed by the following claims.

## Claims

1. A metal drop ejecting apparatus comprising:
an ejector head configured to eject melted metal drops through a nozzle;
an magnetic field generator configured to generate a magnetic field at the nozzle;
planar member positioned to receive melted metal drops ejected from the ejector head; and
a controller operatively connected to the magnetic field generator, the controller being configured to operate the magnetic field generator to generate a magnetic field through which the ejected melted metal drops pass before being received at the planar member.

2. The apparatus of claim 1 further comprising:
an electromagnetic coil wound about the nozzle of the ejector head;
an electrical power source;
a switch configured to connect the electrical power source to the electromagnetic coil; and
the controller being operatively connected to the switch, the controller being further configured to operate the switch to connect the electrical power source to the electromagnetic coil selectively to generate the magnetic field selectively.

3. The apparatus of claim 2, the controller being further configured to:
operate the switch to connect the electromagnetic coil to the electrical power source when a support structure is being formed with the melted metal drops ejected from the ejector head; and
operate the switch to disconnect the electromagnetic coil from the electrical power source when a portion of a metal part is being formed with the melted metal drops ejected from the ejector head.

4. The apparatus of claim 3, the electromagnetic coil further comprising:
a plurality of arrangements of electrical conducting wire, each arrangement having a plurality of concentric turns of electrical conducting wire that form a disc of electrical conducting wire and each disc extends perpendicularly from a circumference of a passageway through the nozzle, the arrangements being parallel to one another along a portion of a length of the nozzle.

5. The apparatus of claim 4 wherein each arrangement of concentric turns of electrical conducting wire produces an American Wire Gauge 2/0 wire gauge, optionally wherein each arrangement of concentric turns of the electrical conducting wire includes ten concentric turns of the electrical conducting wire, and further optionally wherein the plurality of arrangements includes ten arrangements of electrical conducting wire that are parallel to one another along a ten millimeter length of the nozzle.

6. The apparatus of claim 5 wherein the electrical power source supplies an electrical current of up to 220 Amps to the plurality of arrangements when connected to the electromagnetic coil through the switch, optionally wherein the magnetic field produced by the plurality of arrangements is approximately 2700 Gauss and a distance between the planar member and the nozzle is approximately 10 mm.

7. The apparatus of claim 6 further comprising:
a source of an inert gas configured to produce a flow of inert gas around the nozzle in a direction parallel to a path of travel for melted metal drops ejected from the nozzle;
a valve between the source of the inert gas and the nozzle; and
the controller being operatively connected to the valve, the controller being further configured to:
operate the valve selectively to remove the flow of inert gas from around the nozzle when the electromagnetic coil is generating a magnetic field.

8. A method of operating a metal drop ejecting apparatus comprising:
detecting a portion of a support structure layer to be formed with an ejector head configured to eject melted metal drops through a nozzle toward a planar member; and
operating a magnetic field generator to generate a magnetic field through which the ejected melted metal drops pass before being received at the planar member.

9. The method of claim 8 further comprising:
operating a switch configured to connect electrical power selectively to an electromagnetic coil wound about the nozzle of the ejector head to generate the magnetic field when the detected portion of the support structure layer is being formed with the melted metal drops ejected from the ejector head.

10. The method of claim 9 further comprising:
operating the switch to disconnect the electromagnetic coil from the electrical power source when a portion of a metal part is being formed with the melted metal drops ejected from the ejector head.

11. The method of claim 9, the operation of the switch to connect the electromagnetic coil to electrical power further comprising:
connecting electrical power to a plurality of arrangements of electrical conducting wire, each arrangement having a plurality of concentric turns of electrical conducting wire that form a disc of electrical conducting wire and each disc extends perpendicularly from a circumference of a passageway through the nozzle, the arrangements being parallel to one another along a portion of a length of the nozzle.

12. The method of claim 11 wherein each arrangement of concentric turns of electrical conducting wire produces an American Wire Gauge 2/0 wire gauge, optionally wherein each arrangement of concentric turns of the electrical conducting wire includes ten concentric turns of the electrical conducting wire, and further optionally wherein the plurality of arrangements includes ten arrangements of electrical conducting wire that are parallel to one another along a ten millimeter length of the nozzle.

13. The method of claim 12, the operation of the switch to connect electrical power to the plurality of arrangements of electrical conducting wire further comprising:
connecting an electrical power source that is configured to supply an electrical current of up to 220 Amps to the plurality of arrangements.

14. The method of claim 13, the generation of the magnetic field further comprising:
producing the magnetic field with a field strength of approximately 2700 Gauss across a distance of approximately 10 mm between the planar member and the nozzle.

15. The method of claim 13 further comprising:
operating a valve operatively connected to a source of an inert gas to supply a flow of inert gas around the nozzle when the plurality of arrangements of electrical conducting wire is not generating a magnetic field; and
operating the valve to remove the flow of inert gas from around the nozzle when the plurality of arrangements of electrical conducting wire is generating a magnetic field.
